Europäisches Patentamt

European Patent Office

Office européen des brevets

(11) Veröffentlichungsnummer: **0 220 395**
**B1**

(12) **EUROPÄISCHE PATENTSCHRIFT**

(45) Veröffentlichungstag der Patentschrift:
**11.04.90**

(51) Int. Cl.⁴: **B62H 3/00**

(21) Anmeldenummer: **86110578.1**

(22) Anmeldetag: **31.07.86**

(54) **Fahrradständer.**

(30) Priorität: **04.10.85 DE 3535525**

(43) Veröffentlichungstag der Anmeldung:
**06.05.87 Patentblatt 87/19**

(45) Bekanntmachung des Hinweises auf die Patenterteilung:
**11.04.90 Patentblatt 90/15**

(84) Benannte Vertragsstaaten:
**AT BE CH FR GB IT LI LU NL SE**

(56) Entgegenhaltungen:
**CH-A- 130 054**
**CH-A- 211 408**
**DE-U- 8 512 445**
**GB-A- 659 489**
**US-A- 4 306 660**

(73) Patentinhaber: **Kalisch, Heinrich, Lenaustrasse 77,**
**D-6000 Frankfurt/Main(DE)**
Patentinhaber: **Meurer, Rolf, Am Weimarfloss 9,**
**D-6000 Frankfurt/Main(DE)**

(72) Erfinder: **Kalisch, Heinrich, Lenaustrasse 77,**
**D-6000 Frankfurt/Main(DE)**
Erfinder: **Meurer, Rolf, Am Weimarfloss 9,**
**D-6000 Frankfurt/Main(DE)**

(74) Vertreter: **Chambosse, Hans-Joachim,**
**Bockenheimerstrasse 63, D-6000 Frankfurt am Main(DE)**

ACTORUM AG

## Beschreibung

Die Erfindung betrifft einen Fahrradständer, der von dem Prinzip des Anlehnens des Fahrrads, in weiterer Ausführungsform in Verbindung mit dem Prinzip der zangenmäßigen Justierung eines Rads des abgestellten Fahrrads, Gebrauch macht und sowohl zur Aufstellung als Einzelständer zur Einstellung von bis zu zwei Fahrrädern als auch zur Bildung von Fahrradabstellanlagen mit beliebiger Anzahl von Parkstellen für Fahrräder bestimmt und geeignet ist.

Fahrradständer sind in verschiedener Ausführungsform seit langem bekannt und im Einsatz. Mit am längsten gebräuchlich sind sog. Traditions-Gewerbeständer, bei denen Metallstäbe in die Form spitzwinkliger Dreiecke gebracht sind, bei denen der Winkel mit dem kleinsten Winkelmaß an der oberen Spitze liegt und bei denen mehrere solcher Dreiecke im Abstand von ca. 10 cm so auf einem Grundrahmen oder Quertraversen befestigt sind, daß sie parallel zueinander verlaufen. In die dadurch gebildeten Gitter wird das Vorderrad des Fahrrads eingeschoben, wobei die Nutzung von beiden Seiten möglich ist. Diese Traditions-Gewerbeständer haben vor allem den Nachteil, daß die nebeneinander oder gegenüber abgestellten Fahrräder sich ineinander über die Lenkerbügel, Vorderradnaben oder Pedale verhaken können. Sie sind außerdem bezüglich der Zahl der Stellplätze unveränderbar festgelegt, führen leicht zu Beschädigungen der eingestellten Fahrräder durch ihre eigenen Bauteile (insbesondere Schäden an der Lackierung, an Schutzblechen usw.) und befriedigen auch nicht in ästhetischer Hinsicht.

Ferner sind seit langem Kufenständer bekannt, bei denen zu Kufen gebogene Blechstreifen auf Gerüsten oder L-förmigen Winkeln eingeschweißt sind und die Aufstellung flach oder im schrägen Winkel erfolgt. Diese Kufenständer vermeiden zwar, soweit genügender Abstand der einzelnen nebeneinanderliegenden Kufen gewahrt ist, die Gefahr der Beschädigung des eingestellten Fahrrads an Gabel, Lenkerbügel, Rädern. Die Kufen bieten jedoch nur ungenügenden Halt, da das abgestellte Fahrrad lediglich mit den Reifen eines oder beider Räder und allenfalls mit einem kurzen Bereich der Radfelge von der Kufe erfaßt wird. Ferner besteht die Gefahr der Beschädigung der Räder durch Verbiegung der Felgen und- bie Hochaufstellung - die Gefahr des Absturzes des Rads bei wenig sorgsamem Einstellen des Rads. Schließlich sind diese Kufenständer sehr platzaufwendig und ebenfalls nicht dem jeweiligen Bedarf an Stellplätzen anpaßbar.

Weithin gebräuchlich sind die sog. Clip-Radständer, bei denen zwei parallel laufende, senkrecht angeordnete Bügel so miteinander verbunden und an Stützen, Traversen oder einer Mauer befestigt sind, daß sie über ihre gesamte Tiefe oder teilweise einen senkrecht verlaufenden Spalt haben. In diesen wird das abzustellende Fahrrad mit dem Vorderrad eingeschoben, um darin justiert zu werden. Auch diese Clip-Radständer haben wesentliche Nachteile.

Insbesondere ist die Justierung des abgestellten Fahrrads zumeist ungenügend, schon wegen der verschieden breiten Reifen/Felgen der im Verkehr befindlichen Fahrräder. Zudem können die Clip-Bügel relativ leicht verbogen und damit völlig unbrauchbar werden. Ferner erfordert jeder Fahrradständer entweder eine eigene im Boden fest verankerte Stütze oder Traversen mit entsprechender Verankerung bzw. Befestigungselemente an Mauern. Auch die Verankerung der Stütze im Boden ist jedenfalls bei Einzelaufstellung anfällig für Beschädigungen. Schließlich sind die Clip-Radständer unabhängig von der verwandten Form der Bügel der Clips in ästhetischer Hinsicht wenig befriedigend.

Die vorgenannten Nachteile der Clip-Radständer haben im wesentlichen auch die Bügel-Radständer, bei denen den Bügeln der Clips im wesentlichen entsprechende Bügel mit waagerecht verlaufender Öffnung auf dem Boden aufgestellt oder auch im Boden verankert sind. Sie haben insbesondere auch den Nachteil ungenügender Standsicherheit bei vielen Fahrradtypen mit schmalen Reifen oder kleinen Rädern; soweit sie nicht im Boden verankert sind, sind sie darüber hinaus in sich wenig standsicher.

Die als Alternative verwandten Fahrradgeländer, die aus einem Rohrbügel zum Anlehnen des Fahrrads in halber Höhe oder in Höhe des Lenkkopfrohrs/Lenkerschafts bestehen, haben wesentliche Nachteile. Zum einen hat das angelehnte Fahrrad relativ wenig Halt an dem senkrecht stehenden Rohrbügel und erfordert es sorgfältiges Anlehnen mit der notwendigen Schrägstellung. Zum anderen muß der Rohrbügel unabdingbar im Untergrund verankert oder das Fahrradgeländer mit großflächigen Grundplatten versehen sein, um namentlich bei einseitiger Abstellung eines Fahrrads ausreichend standsicher zu sein. Hinzu kommt ein erheblicher Raumbedarf.

Zu dieser Gruppe von Fahrradständern gehört der Fahrradparker gemäß der DE-U 8 512 445, der zur Vermeidung der Nachteile der vorerwähnten Fahrradständer, insbesondere Clip-Radständer, Kufenständer und Bügelradständer, vom Anlehnprinzip Gebrauch macht. Dabei ist vorgeschlagen, dem Fahrradparker die Form einer liegenden, rechts- oder linksdrehenden Wendel von annähernd quadratischem Querschnitt zu geben, wobei die senkrechten Abschnitte der Wendel, die jeweils ein Fahrradgeländer sind, keinen Steigungswinkel aufweisen, also rechtwinklig zum Boden verlaufen, und die Kantenlänge des Quadrats in etwa dem mittleren Durchmesser eines Fahrradlaufrads entspricht. Die Wendel wird dadurch gebildet, daß die auf dem Boden aufliegenden waagerechten Abschnitte eine Steigung von 45° bis 70°, vorzugsweise von 66°, aufweisen. Damit ist zwar der Nachteil des großen Raumbedarfs der erwähnten Fahrradgeländer vermieden, indem durch die Steigung der Wendel am Boden eine Aneinanderreihung quadratischer Geländer erzielt wird. Es bleiben jedoch die Nachteile der Fahrradgeländer bzw. -ständer nach dem Anlehnprinzip mit senkrecht angeordneten Anlehnstangen bzw. -flächen. Zudem wird durch die ausdrückliche Bemessung der Kantenlänge des Quadrats der Wendel auf dem mittleren Durchmesser des Fahrradlaufrads die Gefahr des Herausfallens des Fahrrads aus dem Fahrradparker bzw. des Umfalls des Fahrrads noch vergrößert, indem es nur mit dem einen Laufrad, regelmäßig mit dem Vorderrad, angelehnt ist.

Der Erfindung liegt die Aufgabe zugrunde, einen Fahrradständer der eingangs genannten Art zu schaffen, bei dem unter Vermeidung der Nachteile der bekannten Konstruktionen, insbesondere der Clip-Radständer, Kufenständer, Bügel-Radständer und Fahrradgeländer, eine größere Standsicherheit der im Fahrradständer abgestellten Fahrräder mit weitgehendem Ausschluß der Gefahr der Beschädigung, größere Standsicherheit des Fahrradständers bei rationellerer Ausnutzung der zum Parken der Fahrradständer verfügbaren Fläche und die bessere räumliche sowie ästhetische Anpassung an das Umfeld des Aufstellungsorts erreicht werden. Zugleich soll die Möglichkeit einer einfachen und den besonderen Gegebenheiten des Aufstellungsorts anpaßbare Verkettung beliebig vieler Fahrradständer gemäß der Erfindung erreicht werden.

Diese Aufgabe wird erfindungsgemäß durch die im kennzeichnenden Teil des Patentanspruchs 1 aufgeführten Merkmale gelöst. Vorteilhafte Ausgestaltungen der Erfindung sind in den Unteransprüchen aufgeführt.

Es folgt die Beschreibung von Ausführungsbeispielen der Erfindung anhand von Zeichnungen. Dabei zeigen

Fig. 1 eine Isometrie-Darstellung des erfindungsgemäßen Fahrradständers mit durchlaufenden Endabschnitten im Bodenbereich;

Fig. 2 den Fahrradständer gemäß Fig. 1 in Seitenansicht;

Fig. 3 den Fahrradständer gemäß Fig. 1 in Vorderansicht;

Fig. 4 den Fahrradständer gemäß Fig. 2 mit eingestelltem Fahrrad;

Fig. 5 den Fahrradständer wie in Fig. 1, jedoch mit rechtsdrehendem Spiralabschnitt und zusätzlichen Sehnen;

Fig. 6 eine Isometrie-Darstellung des erfindungsgemäßen Fahrradständers mit eckig gebogenem, trapezförmigem "Spiralabschnitt" mit zusätzlichen Sehnen;

Fig. 7 den Fahrradständer in Seitenansicht mit "Spiralabschnitt" in Rechteckform mit zusätzlichen Sehnen, in Seitenansicht;

Fig. 8 den Fahrradständer gemäß Fig. 7, jedoch ohne Sehnen;

Fig. 9 den Fahrradständer gemäß Fig. 7 in Vorderansicht;

Fig. 10 eine Verkettung von zwei erfindungsgemäßen Fahrradständern mit Distanz-Verbindungsstück, in Aufsicht;

Fig. 11 die weitere Verkettung von zwei erfindungsgemäßen Fahrradständern gemäß Fig. 10, jedoch als Explosionsdarstellung;

Fig. 12 die Verkettung von zwei Fahrradständern gemäß Fig. 10, jedoch in Seitenansicht;

Fig. 13 die Verkettung von zwei erfindungsgemäßen Fahrradständern mit einer Variante des Distanz-Verbindungsstücks, in Aufsicht;

Fig. 14 die Verkettung von zwei erfindungsgemäßen Fahrradständern mit einer weiteren Variante des Distanz-Verbindungsstücks, in Aufsicht;

Fig. 15 die Verkettung von zwei erfindungsgemäßen Fahrradständern mit einer weiteren Variante des Distanz-Verbindungsstücks, in Aufsicht.

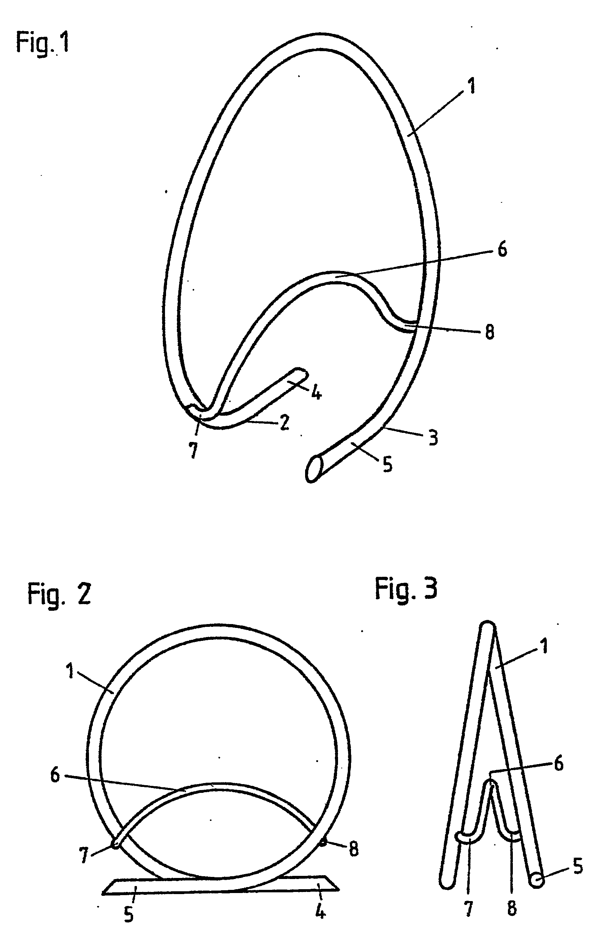

Der erfindungsgemäße Fahrradständer besteht im Ausführungsbeispiel gemäß Fig. 1 bis 4 aus dem Wendelabschnitt 1 in Form eines kreisförmigen Spiralabschnitts (im weiteren Spiralabschnitt 1 genannt) aus gebogenem Rohr, der vertikal angeordnet ist und mit seinen Enden 2 und 3 auf dem Boden aufsteht. Dabei sind die Enden 2 und 3 des Spiralabschnitts 1 bei Einzelaufstellung des Fahrradständers zur Erreichung größerer Standsicherheit durch Endstücke 4 und 5 verlängert. Der Spiralabschnitt 1 weist eine stetige Steigung auf und der Durchmesser bei der dargestellten Ausführungsform mit kreisförmigem Spiralabschnitt ist so bemessen, daß der obere Scheitelpunkt sowie der angrenzende obere Bereich in ihrer Höhe etwa die durchschnittliche Höhe der Bereiche Lenkkopfrohr und Lenkerschaft bzw. Sattelstütze und Oberteil der Hintergabelstrebe, gegebenenfalls auch des Oberrohrs von handelsüblichen Fahrrädern aufweisen.

Im unteren Bereich des Spiralabschnitts 1 ist die Verbindungsstrebe 6 angebracht, wobei deren beide Enden 7 und 8 so geformt sind, daß die Verbindungsstrebe 6 im Bereich ihrer beiden Ansätze an dem Spiralabschnitt 1 von diesem einen Abstand hat, der mindestens der größten Querschnittsbreite der Reifen und der Felgen der handelsüblichen Fahrräder entspricht.

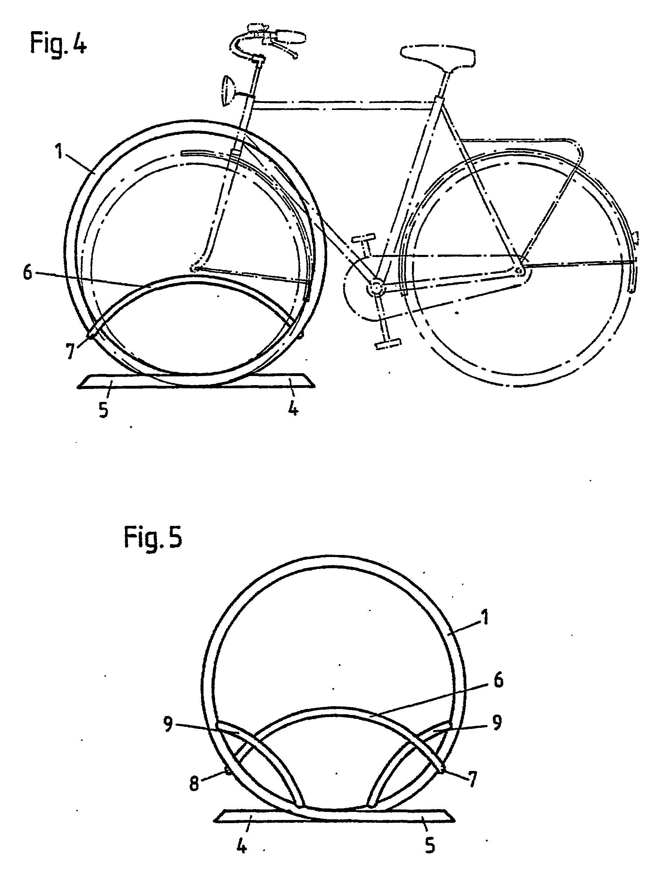

Der beschriebene Fahrradständer kann zwei Fahrräder aufnehmen, die entgegengesetzt auf beiden Längsseiten in ihn hineingeschoben werden, wie in Fig. 4 dargestellt.

Wie in Fig. 1 bis 4 ebenfalls dargestellt, ist die Verbindungsstrebe 6 zweckmäßigerweise an dem Spiralabschnitt 1 in einer solchen Höhe angebracht, daß ihre Enden 7 und 8 zugleich einen Anschlag für die in den Fahrradständer eingeschobenen Fahrräder bilden. Jedoch kann die Verbindungsstrebe 6 auch an anderer Stelle des Spiralabschnitts 1 angebracht sein, insbesondere auch als unmittelbare Verbindung der Enden 2 und 3 des Spiralabschnitts 1 am Boden verlaufen.

In Weiterbildung der Erfindung sind - wie in Fig. 5 dargestellt - im bodennahen unteren Bereich des Spiralabschnitts 1 auf dessen beiden Seiten jeweils Sehnen 9 angebracht, die einen Abschnitt des Vorder- bzw. Hinterrads des in den Fahrradständer eingeschobenen Fahrrads seitlich überlappen und so zusammen mit der Verbindungsstrebe 6 als Gegenstück als Haltebügel bzw. -Clip für das Fahrrad wirken.

Erfindungsgemäß kann der Spiralabschnitt 1, statt, wie in Fig. 1 bis 4 linksdrehend, auch rechtsdrehend sein. Im Rahmen der Erfindung liegt es ferner, daß der Spiralabschnitt 1 nicht kreisförmig verläuft, sondern mit geändertem Kurvenradius, wie z.B. elliptisch.

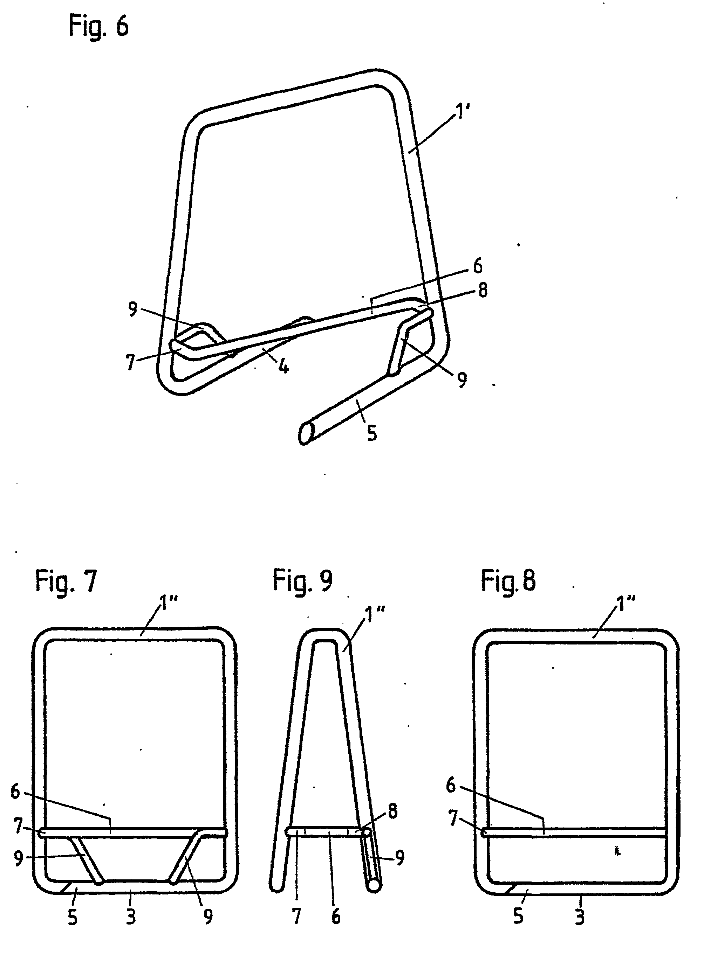

Es liegt weiter im Rahmen der Erfindung, wie in Fig. 6 bis 9 dargestellt, das Rohr des Spiralabschnitts 1 nicht rund, sondern eckig zu biegen, so daß er in der Seitenansicht die Form eines Trapezes 1', Rechtecks 1", Quadrats o.ä. aufweist, deren untere Schenkel entsprechend dem beschriebenen Spiralabschnitt 1 aufgebogen sind und zweckmäßigerweise ebenfalls die Verlängerungen 4 und 5 haben.

Der Fahrradständer kann aus verschiedenem Material bestehen, vorzugsweise aus Metall, Kunststoff, Bugholz, wobei gleichermaßen Rohr oder Vollmaterial in Betracht kommen.

In Weiterführung der Erfindung hat der Fahrradständer an den Enden 2 und 3 des Spiralabschnitts 1, 1', 1" statt untrennbar angesetzter Endabschnitte 4, 5 die fest, jedoch lösbar angesetzten Endstücke 4', 5', die über Zapfen 10 oder in sonstiger bekannter Weise mit dem Spiralabschnitt 1, 1', 1" verbunden werden. Nach Abnahme eines oder beider Endstücke 4', 5' kann an jeder Seite des Fahrradständers ein weiterer erfindungsgemäßer Fahrradständer unmittelbar angesetzt werden. In dieser Weise ist in Endlosbauweise eine beliebige Anzahl von Fahrradständern aneinandersetzbar, die in ihrer Gesamtansicht die Form einer laufenden Spirale bzw. spiralähnliche Form zeigen.

In zusätzlicher Weiterbildung der Erfindung werden, wie in Fig. 11 bis 15 dargestellt, zur Verkettung mehrerer Fahrradständer zwischen deren Enden 2, 3 am Boden des Aufstellplatzes Distanz-Verbindungsstücke 11 bis 14 eingesetzt, deren Form weitgehend frei wählbar ist und je nach dieser Form unterschiedliche Anordnungen und Abstände der einzelnen Fahrradständer in ihrer Verkettung bewirken.

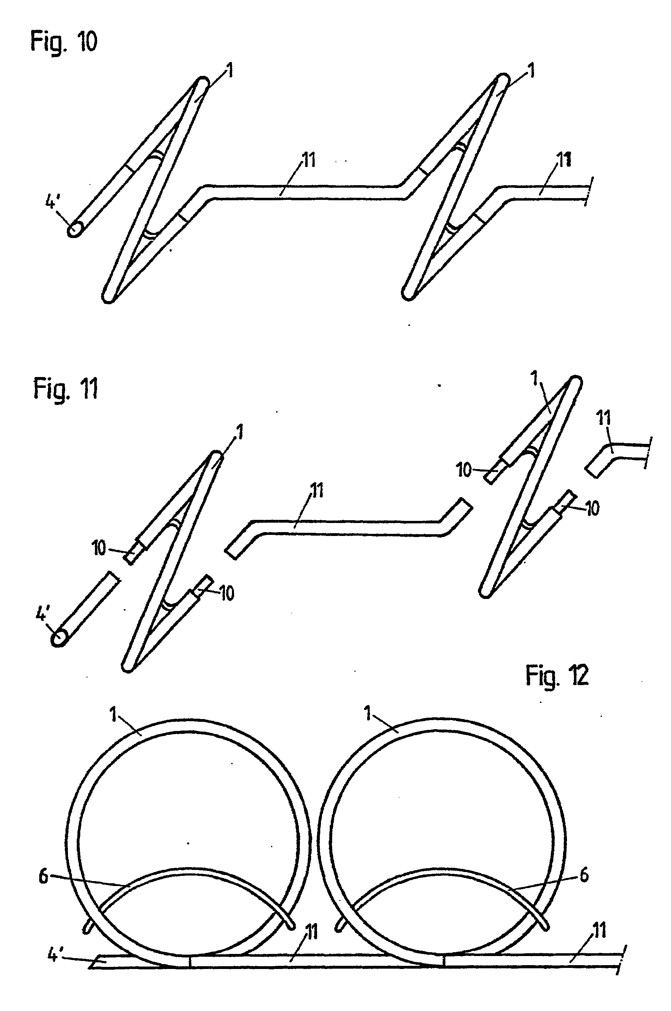

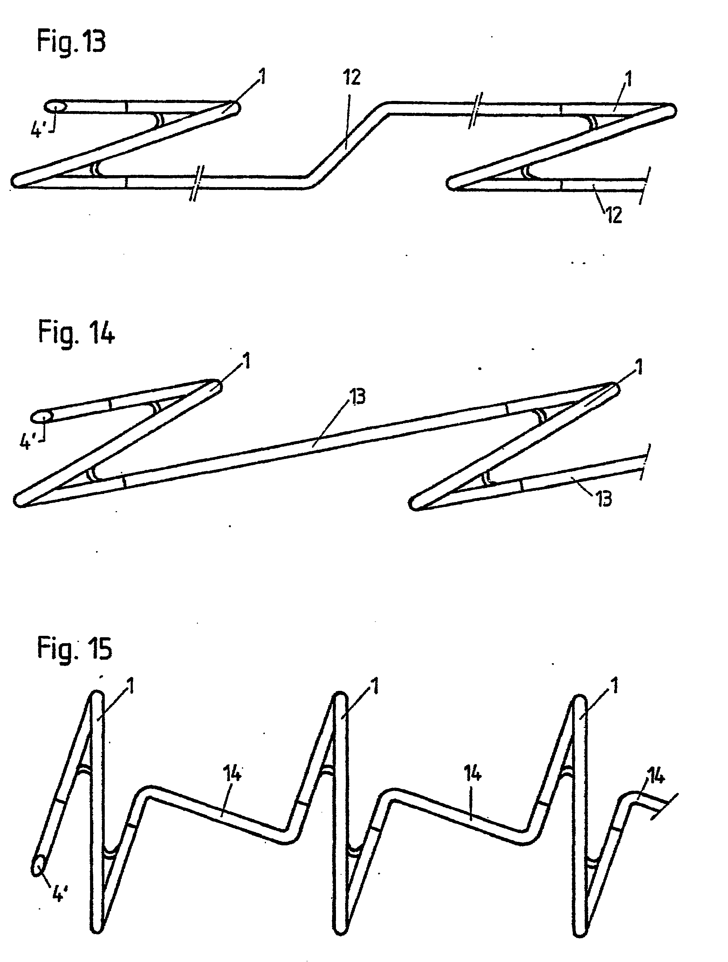

In Fig. 10 ist eine horizontale Aneinanderreihung von Fahrradständern dargestellt, bei der die eingestellten Fahrräder diagonal zur Längsrichtung der Fahrradständer, aber parallel zueinander stehen. In Fig. 11 und 12 ist eine gegenüber der Horizontalen seitlich versetzte Anordnung verketteter Fahrradständer zu sehen, bei der die Fahrräder ebenfalls diagonal zur Längsrichtung der Fahrradständerreihe, jedoch parallel zueinander stehen. In Fig. 14 ist eine Verkettung dargestellt, bei der die Fahrräder - jeweils in Zweiergruppen - in Längsrichtung der Fahrradständerreihe hintereinander stehen.

Fig. 14 und 15 zeigen weitere Varianten der Verkettung der Fahrradständer.

Die erfindungsgemäßen Fahrradständer haben bereits ohne sonstige Maßnahmen sowohl einzeln als auch verstärkt in ihrer Verkettung die erforderliche Standfestigkeit. Soweit eine zusätzliche Sicherung gegen Verschiebung und/oder gegen Diebstahl usw. vom Verwender gewünscht wird, kann diese in bekannter Weise mittels Schellen, Zapfen o.ä. geschehen, die an den Enden 2, 3 der Fahrradständer oder, bei der Verkettung mehrerer Fahrradständer, auch an den Distanz-Verbindungsstücken 11, 12, 13, 14 angesetzt und im Untergrund verankert werden.

Der erfindungsgemäße Fahrradständer bietet gegenüber den bekannten Konstruktionen folgende Vorteile:

Er macht von dem Anlehnprinzip Gebrauch, das Fahrrad wird somit nicht lediglich, wie bei den Clip- und Bügel-Fahrradständern, in einem Teilabschnitt des Vorderrads gehalten. Durch die Form des Spiralabschnitts bzw. die gleich wirkende Form mit eckiger Biegung lehnt sich das eingestellte Fahrrad über einen weiten Bereich des Lenkkopfrohrs/-Lenkerschafts und/oder der Sattelstütze/des Oberteils der Hintergabelstrebe sowie ggf. des Oberrohrs an, wobei sämtliche handelsüblichen Fahrräder unabhängig von ihrer Bauhöhe sicher angelehnt werden.

Durch die Form des Spiralabschnitts und die damit verbundene Spreizung des Fahrradständers im Bodenbereich wird zugleich als Vorteil gegenüber den Fahrradgeländern schon von der Konstruktion her die erforderliche Schrägstellung des Fahrrads nach seiner Einstellung bewirkt, um den sicheren Stand zu gewährleisten. Durch die Verbindungstrebe zwischen den beiden Bogenteilen bzw. Schenkeln im unteren Bereich des Fahrradständers mit der winkelförmigen Anlenkung der Verbindungsstrebe erhält das eingestellte Fahrrad einen zusätzlichen Halt im Bereich des Rads in Form des beschriebenen Anschlags. Bei der Ausführung mit zusätzlichen Sehnen wird das Prinzip der Anlehnung des Fahrrads mit dem des Einspannens des Laufrads kombiniert.

Der erfindungsgemäße Fahrradständer ermöglicht bereits als Enzelständer die Einstellung von zwei Fahrrädern. Durch die erfindungsgemäße Konstruktion mit der Einstellung der beiden Räder aus entgegengesetzter Richtung und der Führung der Räder in den Ständer durch dessen vorgegebene Form werden gegenseitige Behinderungen der Räder durch die Lenkerbügel, Radnaben, Pedale oder andere Bauteile vermieden. Die Fahrräder können ferner gleichermassen vorwärts oder rückwärts eingeparkt werden und stehen in beiden Fällen gleich sicher im Fahrradständer.

Der erfindungsgemäße Fahrradständer hat bereits einzeln durch die Spreizung im Bodenbereich ausreichende Standsicherheit und kann daher frei stehen. Er bietet ferner den erheblichen Vorteil, mit und ohne Einsetzung der Distanz-Verbindungsstücke in Endlosbauweise zu Abstellanlagen verkettet werden zu können. Die frei wählbare Form der Distanz-Verbindungsstückegibt darüber hinaus die Möglichkeit, je nach den vorgegebenen Platzverhältnissen den Abstand und die Anordnung der einzelnen Fahrradständer in der Verkettung zueinander anzupassen und dabei zugleich unterschiedliche ästhetische Gesamteindrücke zu erreichen. Namentlich bei der Verkettung mehrerer erfindungsgemäßer Fahrradständer erübrigt die eigene Standfestigkeit eine zusätzliche Verankerung im Boden. Soll eine zusätzliche Verankerung gleichwohl erfolgen, ist im Gegensatz zu den bekannten Konstruktionen nur solche an einzelnen Stellen der Fahrradständeranlage erforderlich.

Schließlich ist durch die Form der erfindungsgemäßen Fahrradständer, insbesondere bei der Verwendung von Spiralanschnitten mit Rundbogen, im Gegensatz zu vielen der bekannten Fahrradständer eine Verletzungsgefahr so gut wie ausgeschlossen und wird eine entscheidende Verbesserung der Ästhetik, namentlich auch in bezug auf die harmonische Anpassung an das Umfeld, erreicht.

## Patentansprüche

1. Fahrradständer zum Einstellen von Fahrrädern aus entgegengesetzter Richtung, wobei dieser Ständer aus mindestens einer im wesentlichen vertikal angeordneten Wendel aus gebogenem Rohr oder Vollmaterial besteht, deren Enden durch Endstücke (4) und (5) verlängert sind und auf dem Boden aufstehen, dadurch gekennzeichnet, daß die Wendel (1) eine stetige Steigung aufweist und der obere Scheitelpunkt sowie der angrenzende Bereich der Wendel (1) in ihrer Höhe der durchschnittlichen Höhe der Bereiche Lenkkopfrohr/Lenkerschaft und Sattelstütze/Oberteil Hintergabelstrebe der handelsüblichen Fahrräder entsprechen, und daß im unteren Bereich der Wendel (1) jeweils an den gegenüberliegenden Bogenteilen eine Verbindungsstrebe (6) angebracht ist, an deren beiden Enden (7, 8) Winkel angeformt sind, so daß der Abstand zwischen der Wendel (1) und der Verbindungsstrebe (6) im Bereich der Verbindung zwischen Strebe und Wendel mindestens der größten Querschnittsbreite der Reifen und Felgen der handelsüblichen Fahrräder entspricht.

2. Fahrradständer gemäß Patentanspruch 1, dadurch gekennzeichnet, daß die Winkelstücke an den Enden (7) und (8) der Verbindungsstrebe (6) jeweis den Anschlag für das in den Fahrradständer eingeschobene Fahrrad bilden.

3. Fahrradständer gemäß Patentanspruch 1, dadurch gekennzeichnet, daß im unteren Bereich des Wendel (1) an den gegenüberliegenden Bogenteilen jeweils eine Sehne (9) so angebracht ist, daß sie bei dem Einstellen der Fahrräder einen Abschnitt des Laufrades überlappt.

4. Fahrradständer gemäß Patentanspruch 1, dadurch gekennzeichnet, daß die Wendel (1) linksdrehend oder rechtsdrehend ist.

5. Fahrradständer gemäß Patentanspruch 1 oder 4, dadurch gekennzeichnet, daß die Wendel (1) mit sich änderndem Kurvenradius verläuft.

6. Fahrradständer gemäß Patentanspruch 1 oder 4, dadurch gekennzeichnet, daß das Rohr/Vollmaterial des Wendelabschnitts (1) eckig gebogen ist und die Wendel (1) die Form eines Trapezes 1', Rechtecks 1", Quadrats, Dreiecks oder andere geometrische Form hat, deren untere Schenkel aufgebogen sind.

7. Fahrradständer gemäß Patentanspruch 1, 4 oder 6, dadurch gekennzeichnet, daß an den Enden (2) und (3) der Wendel (1, 1', 1") fest, jedoch lösbar angesetzte Endstücke (4', 5') angesetzt sind, die über Zapfen (10) oder in sonstiger bekannter Weise mit der Wendel (1, 1', 1") verbunden werden.

8. Fahrradständer gemäß Patentanspruch 7, dadurch gekennzeichnet, daß nach Lösung der Endstücke (4' und/oder 5') an den Fahrradständer ein weiterer Fahrradständer gemäß Patentanspruch 7 über die Zapfen (10) oder in sonstiger Weise fest, jedoch lösbar angesetzt wird.

9. Fahrradständer gemäß Patentanspruch 7, dadurch gekennzeichnet, daß nach Lösung der Endstücke (4' und/oder 5') an die Enden (2 und/oder 3) der Wendel (1, 1', 1") Distanz-Verbindungsstücke (11, 12, 13, 14) über die Zapfen (10) oder in sonstiger bekannter Weise fest, jedoch lösbar angesetzt werden, deren beide Enden zur derartigen Verbindung mit dem Fahrradständer gemäß Patentanspruch 7 geeignet sind und deren frei wählbare Form den Abstand zwischen den damit verbundenen Fahrradständern und deren Anordnung zueinander bestimmt.

10. Fahrradständer gemäß Patentanspruch 8, dadurch gekennzeichnet, daß durch die Aneinanderfügung der Fahrradständer, ohne oder mit Distanz-Verbindungsstücken (11, 12, 13, 14), Fahrradständerreihen in Endlosbauweise gebildet werden.

11. Fahrradständer gemäß Patentanspruch 1 und einem oder mehreren der Patentansprüche 2 bis 10, dadurch gekennzeichnet, daß die Wendel (1, 1', 1"), die Endstücke (4, 4', 5, 5'), die Verbindungsstrebe (6) und die Sehne (9) aus Metall, Kunststoff, Bugholz oder sonstigem steifem und witterungsbeständigem Material bestehen.

## Claims

1. Bicycle rack for parking of bicycles in opposite directions consisting of at least one substantially vertically arranged helix of curved tube or of solid material of which the ends are extended by end pieces (4) and (5) and stand on the ground, characterized in that the helix (1) has a constant lead and the height of the crown as well as the adjoining portions of the helix (1) correspond to the height of the handlebar stay tube/handlebar shaft and saddle support/top of backstays of standard bicycles and that in the lower part of the helix (1) a tie rod (6) each is fixed to opposing curve portions both ends of which (7, 8) are formed to an angular shape so that the distance between the helix (1) and the tie rod (6) in the area where the helix and the tie rod are connected corresponds at least to the maximum cross-sectional width of the tyres and rims of standard bicycles.

2. Bicycle rack as defined in claim 1, characterized in that the angular pieces at the ends (7) and (8) of the tie rod (6) each constitute the stop for the bicycle pushed into the bicycle rack.

3. Bicycle rack as defined in claim 1, characterized in that the lower part of the helix (1) a chord-type piece (9) is fixed to opposing curve portions in such manner that it overlaps a portion of the wheel when the bicycles are parked.

4. Bicycle rack as defined in claim 1, characterized in that the helix (1) is designed as right-hand or left-hand helix.

5. Bicycle rack as defined in claims 1 or 4, characterized in that the helix (1) is designed with varying curve radius.

6. Bicycle rack as defined in claims 1 or 4, characterized in that the tube/solid material of the helix (1) is bent to an angular shape and the helix (1) has the shape of a trapezoid 1', rectangle 1", square, triangle or other geometrical form of which the lower sides are bent open.

7. Bicycle rack as defined in claims 1, 4 or 6, characterized in that end pieces (4', 5') are attached to the ends (2) and (3) of the helix (1, 1', 1") in fixed, but detachable manner, such end pieces being connected to the helix (1, 1′, 1″) by means of pins (10) or other known means.

8. Bicycle rack as defined in claim 1, characterized in that after detaching the end pieces (4′ and/or 5′) a further bicycle rack as defined in claim 7 is connected to the bicycle rack by means of the pins (10) or otherwise in fixed, but detachable manner.

9. Bicycle rack as defined in claim 7, characterized in that after detaching the end pieces (4′ and/or 5′) distance connecting pieces (11, 12, 13, 14) are connected to the ends (2 and/or 3) of the helix (1, 1′, 1″) by means of the pins (10) or other known means in fixed, but detachable manner, both ends of such distance connecting pieces being suitable for such connection to the bicycle rack as defined in claim 7 and the freely selectable form of which determining the distance between the bicycle racks thus connected and their arrangement relative to each other.

10. Bicycle rack as defined in claim 8 or claim 9, characterized in that by connecting the bicycle racks, with or without the distance connecting pieces (11, 12, 13, 14), endless rows of bicycle racks can be formed.

11. Bicycle rack as defined in claim 1 and one or more of the claims 2 through 10, characterized in that the helix (1, 1′, 1″), the end pieces (4, 4′, 5, 5′), the tie rod (6) and the chord-type piece (9) are made of metal, plastics, bentwood, or other rigid and weather-resistant material.

**Revendications**

1. Support pour bicyclettes pour garer des bicyclettes en sens alterné, ce support étant composé d'au moins une spirale disposée essentiellement verticalement, de tube cintré ou de matériau plein, dont les extrémités sont prolongées par des bouts (4) et (5) reposant sur le sol, caractérisé par le fait que la sprirale (1) présente une augmentation constante et que le point culminant ainsi que la partie adjacente de la spirale (1) correspondent dans leur hauteur à la hauteur moyenne des parties du tube du guidon/tige du guidon et porte-selle/partie supérieure de la fourche arrière des bicyclettes en usage dans le commerce, et qu'à la partie inférieure de la spirale (1) un étai de raccordement (6) est placé aux parties de l'arc opposées aux deux extrémitées duquel (7, 8) des arcs sont formés, de sorte que l'intervalle entre la spirale (1) et l'étai de raccordement (6) dans le secteur du raccordement entre l'étai et la spirale correspond au minimum à la largeur de la section transversale des pneus et des jantes des bicyclettes en usage dans le commerce.

2. Support pour bicyclettes selon la revendication de brevet 1, caractérisé par le fait que les pièces coudées aux extrémités (7) et (8) de l'étai de raccordement (6) forment à chaque fois un butoir pour la bicyclette placée sur le support pour bicyclettes.

3. Support pour bicyclettes selon la revendication de brevet 1, caractérisé par le fait qu'à la partie inférieure de la spirale (1), aux parties de l'arc face à face, une cord (9) est placée de telle sorte qu'en mettant les bicyclettes sur le support pour bicyclettes elle chevauche une partie de la roue.

4. Support pour bicyclettes selon la revendication de brevet 1, caractérisé par le fait que la spirale (1) tourne à gauche ou tourne à droite.

5. Support pour bicyclettes selon la revendication de brevet 1 ou 4, caractérisé par le fait que la spirale (1) se développe avec le rayon de virage changeant.

6. Support pour bicyclettes selon la revendication de brevet 1 ou 4, caractérisé par le fait que le tube/matériau plein de la partie de la spirale (1) est cintré en angle et que la spirale (1) est de la forme d'un trapèze 1′, d'un rectangle 1″, d'un carré, d'un triangle ou d'une autre forme géométrique dont le côté inférieur est cintré.

7. Support pour bicyclettes selon la revendication de brevet 1, 4 ou 6, caractérisé par le fait que, aux extrémités (2) et (3) de la spirale (1, 1′, 1″) des bouts (4′, 5′) sont fixés, cependant de façon amovible, raccordés à la spirale (1, 1′, 1″) par des tenons ou de n'importe quelle autre manière connue.

8. Support pour bicyclettes selon la revendication de brevet 7, caractérisé par le fait que, après détachement des bouts (4′ et/ou 5′), un autre support pour bicyclettes selon la revendication de brevet 7 est fixé au support pour bicyclettes, cependant de façon amovible, au moyen de tenons (10) ou de n'importe quelle manière connue.

9. Support pour bicyclettes selon la revendication de brevet 7, caractérisé par le fait qu'après détachement des bouts (4′ et/ou 5′) aux extrémités (2 et/ou 3) de la spirale (1, 1′, 1″) des raccords d'écartement (11, 12, 13, 14) sont fixés, cependant de manière amovible, sur les tenons (10) ou de n'importe quelle autre manière connue, raccords d'écartement dont les deux extrémités se prêtent à un tel raccordement selon la revendication de brevet 7 et dont la forme, au choix, détermine l'écart entre le support pour bicyclettes et celui qui lui est raccordé et la disposition de l'un par rapport à l'autre.

10. Support pour bicyclettes selon la revendication de brevet 8 ou la revendication de brevet 9, caractérisé par le fait que l'assemblage des supports pour bicyclettes, avec ou sans raccords d'écartement (11, 12, 13, 14), permet la formation infinie de rangées de supports pour bicyclettes.

11. Support pour bicyclettes selon la revendication de brevet 1 ou l'une ou plusieurs des revendications de brevet 2 à 10, caractérisé par le fait que la spirale (1, 1′, 1″), les bouts (4, 4′, 5, 5′), l'étai de raccordement (6) et la corde (9) sont en métal, en matière synthétique, en bois de proue ou en tout autre matériau rigide et résistant aux intempéries.

Fig. 1

Fig. 2

Fig. 3

Fig. 4

Fig. 5

## Fig. 6

## Fig. 7

## Fig. 9

## Fig. 8

Fig. 10

Fig. 11

Fig. 12

Fig. 13

1    12    1

4'    12

Fig. 14

1    13    1

4'    13

Fig. 15

1    1    1

14    14    14

4'